Europäisches Patentamt

European Patent Office

Office européen des brevets

(19)

(11) Publication number: **0 434 337 A2**

# EUROPEAN PATENT APPLICATION

(21) Application number: 90313756.0

(22) Date of filing: **17.12.90**

(51) Int. Cl.5: **G06F 9/44**

(30) Priority: **22.12.89 US 455674**

(43) Date of publication of application:
**26.06.91 Bulletin 91/26**

(84) Designated Contracting States:
**DE FR GB**

(71) Applicant: **AMERICAN TELEPHONE AND TELEGRAPH COMPANY**
**550 Madison Avenue**
**New York, NY 10022(US)**

(72) Inventor: **Garcia, Jose Manuel**
**348B River Road**
**Andover, Massachusetts 01810(US)**

(74) Representative: **Buckley, Christopher Simon Thirsk et al**
**AT&T (UK) LTD. 5 Mornington Road**
**Woodford Green, Essex IG8 OTU(GB)**

(54) Method and apparatus for providing instructions for the production of structured values.

(57) Instructions for producing a structured destination value are provided by applying a rule application specifier to one or more typed source values. The rule application specifier refers to a production rule which specifies how any destination value having the type of the destination value is produced from any source values having the types of the source value. The rule application specifier includes a first part indicating what components of the source values are to be used to produce the destination value and a second part indicating how those components are to be used to produce the destination value. The first and second parts include structure specifiers specifying the structure of any structured types and component names which refer to the components of the source value which are used in the destination value. The component names may refer to components of possibly nested lists. Components from less than all of the elements of a list may be specified, as well as the order in which the components will be used. The second part may include a possibly recursive reference to a production rule which is applied to components represented by component names to produce a component of the destination value. Production rules may also have multiple rule bodies. Which rule body is applied is determined by the values of components of the source values. The instructions are provided by an interpreter which interprets parse trees made by a tree builder from source text containing source code for the types of the values, the production rule, and the rule application. Binding of type information and values to the component names is accomplished by annotating the parse tree representing the production rule.

EP 0 434 337 A2

# METHOD AND APPARATUS FOR PROVIDING INSTRUCTIONS FOR THE PRODUCTION OF STRUCTURED VALUES

## Technical Field

The invention is related to digital computer systems generally and is particularly related to systems for programming digital computers.

## Background of the Invention

### 1. Field of the Invention

One of the fundamental concerns throughout the history of computer technology has been bridging the chasm between the computer and its user. The user knows what he wants the computer to do and can express the what in natural language; the computer must be told how it is to do the job by means of a sequence of binary codes representing commands and memory locations.

Computer technology has attempted to bridge the chasm by using the computer itself. First came assembly language programming systems. Programmers using the systems could write their programs using symbols instead of the binary codes for the commands and memory locations; a program called an assembler then produced the codes required by the computer from the symbols. Though these systems made programming much easier, they still had two fundamental problems: they were hardware specific, since each computer had its own set of command codes and its own assembly language, and they still required the programmer to tell the computer how instead of what.

The next step was the development of high-level languages such as COBOL, FORTRAN, BASIC, or C. These languages were independent of any specific hardware, but permitted the programmer to directly express the algorithm he wished the computer to perform by means of statements specifying such algorithmic concepts as branches, loops, and assignment of values to variables. Moreover, many of the high-level languages permitted the programmer to write his program as a hierarchy of procedures. While the high-level languages were far easier to use than assembly languages, they still required the programmer to specify the how.

The desire to let users of the computer specify the *what* instead of the *how* led eventually to the development of non-procedural or *declarative* languages, i.e., languages which permit the programmer to simply declare to the computer what he wants the computer to do. While the primary impetus behind the development of non-procedural languages was to permit non-programmers to program, they also proved useful to programmers, since they are often able to express what the programmer wants done more clearly and concisely than procedural languages. Such clarity and conciseness is particularly important in programs which are part of large systems. Such programs remain in use for many years and must be understood, used, modified, and maintained by persons other than the original author.

One area in which procedural languages are notably deficient is in describing the production of one structured value from another structured value. A *structured* value is an ordered collection of individually-accessible component values. The component values may be *primitive* values, that is, values which cannot be further subdivided, or other structured values. Two exemplary kinds of structured values are the record and the list. For purposes of the present discussion, the *record* is an ordered set of a fixed number of component values. The component values may all be the same kind of component value, or they may be different kinds of component values. Again for purposes of the present discussion, the *list* is an ordered set of a varying number of component values. The component values of a list must all be of the same kind.

Structured values have been used increasingly in programming to represent the entities manipulated by the program. For example, in an airline reservation system, structured values will represent the aircraft, the customers, the transactions, and the like. As computers have grown more powerful, the entities they have manipulated and the structured values which represent the entities have both grown in complexity. As this has happened, the description of entities and the description of operations on them have become more and more important to programmers.

One class of operations which is particularly important is the production of one structured value from another. In many programs, such operations are central. For example, an interactive program takes structured data representing the user's input and structured data representing the current state of the display and produces from it structured data representing a new state of the display. A compiler takes a source text which is a list of lines, produces a tree representing the source text from the source text, and then produces object code which is a different list of lines. Moreover, whenever different programs are integrated into a system, structured values used in one component of the system must be produced from structured values used in other parts of the system. Prior to the present invention, there has been no good way of specifying the production of one structured value from another in a computer program.

## 2. Description of the Prior Art

The following discussion of the prior art will first present a set of type definitions which will be used in the discussion of the prior art and the discussion of the preferred embodiment and will then present three techniques used in the prior art to specify the production of one structured value from another.

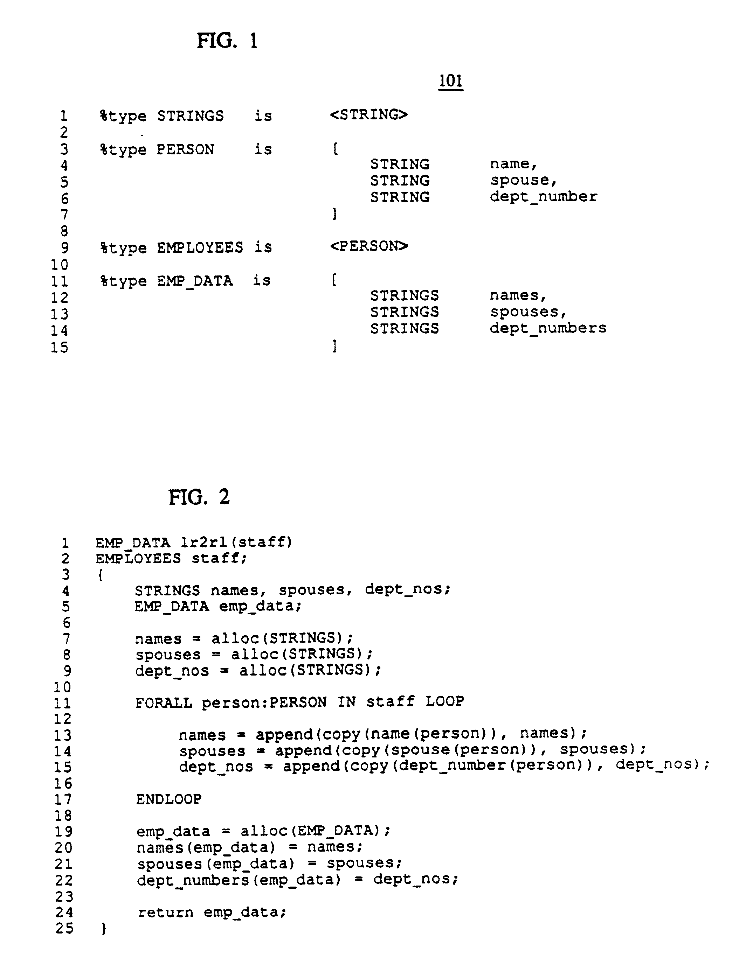

## Example Type Definitions: Fig 1

Fig. 1 shows a number of type definitions 101 which will be referred to in the examples employed in the following discussion of the prior art and the disclosure of the preferred embodiment. Type definitions are used in many programming languages to define the structures of structured values. The programming language typically defines a value as having a given type, and the structure of the value can then be determined by referring to the definition for the value's type. The type definition consists of names representing built-in, i.e., language-defined types, names representing types defined by the programmer, and symbols specifying different kinds of structured types.

The set of type definitions in Fig. 1 defines types for structured values such as one might use in a simple employee data base. The only primitive values employed in the data base are strings, i.e., variable-length sequences of character codes. In the programming language under discussion, strings are a built-in type which is specified in a type declaration by means of the type name "STRING". No other built-in types appear in the definitions of Fig. 1. The programming language of Fig. 1 employs the square brackets "[" and "]" to define record types and the angle brackets "<" and ">" to define list types.

The general form of a type definition may be seen at line 1 of Fig. 1. "%type" indicates that a type is being defined; "STRINGS" is the user-defined name for the type being defined; "is" separates the name from the definition; and "<STRING>" is the definition. In this case, as indicated by the angle brackets, what is being defined is a list. The type name "STRING" indicates that the elements of the list are data items of the built-in STRING type. In general, in definitions of list types, the material between the angle brackets defines the type of the elements of the list. In definitions of record types, square brackets mark the beginning and end of the definition; between the square brackets is a collection of type names followed by field names. Thus, the record type PERSON defined at lines 3-7 has three fields, named "name", "spouse", and "dept_number". Each of the fields has the STRING built-in type.

Once a type name is defined, it can be used to define other types; thus, the type name "PERSON" is used at line 9 to define the type "EMPLOYEES", which is a list whose elements have the type "PERSON", i.e., a list of the records specified in the definition of "PERSON". Similarly, the type name "STRINGS" is used in the definition of the record type "EMP_DATA" at lines 11-15. As may be seen from the definition, "EMP_DATA" is a record type whose fields, named "names", "spouses", and "dept_nos", are lists of the "STRINGS" type.

## Production of Structured Values Using Procedures: Fig. 2

The problem which will be used as an example in the following discussion of the prior art and in the disclosure is the production of a value of the type EMP_DATA from a value of the type EMPLOYEES, i.e., the production of a record of lists from a list of records. The approach typically used in the art has been to write a procedure to produce the desired value. Fig. 2 shows an example of such a procedure. The procedure is written in a variant of the C language which employs macros representing C code to simplify the specification of operations on lists and fields of records. The macros are defined separately from the procedure, and object code corresponding to the procedure is produced by running a preprocessor on the procedure which replaces the macros with the C code which they represent and then compiling the C code produced by the preprocessor.

The procedure is a function called "lr2rl" which returns values of the type EMP_DATA and has a single formal argument named "staff" which has the EMPLOYEES type. As may be seen from the declarations at lines 4 and 5, there are four local variables, three, "names", "spouses", and "dept_nos", being lists of the STRINGS type, and "emp_data" being a record of lists of the EMP_DATA type. In the variant language, components of records are referred to by means of the macro construct

component_name(record_value_name)

Accordingly, name(person) means the component "name" of the record value represented by "person". The first step in the procedure is to allocate storage for the three local list variables (lines 7-9). Next comes a macro construct for a FOR loop (lines 11-17) which processes the list of PERSON records in the value of the EMPLOYEES type represented by the "staff" formal argument. For each record in the list, the FOR loop makes a copy of the "name" component of PERSON and appends it to the list represented by the local variable "names", makes a copy of the "spouse" component and appends it to the "spouses" list, and makes a copy of the "dept_no" component and appends it to the "dept_nos" list. The next step is to allocate storage for the local variable "emp_data" (line 19). That done, the procedure assigns the list "names" to the "names" component of "emp_data", the list "spouses" to the "spouses" component of "emp_data", and the list "dept_nos" to the "dept_numbers" component of "emp_data" (lines 19-22). The last step is to return the value of "emp_data" to the procedure which invoked "lr2rl" (line 24).

As may be seen by the foregoing, procedural specification of the production of one structured value from another has the same problems that it has generally: instead of clearly specifying what he wants done, the programmer has to specify how the computer does it. Moreover, the procedure necessarily deals with the transfer of the components between the values, and consequently does not clearly show the relationship between the overall structures of the structured values.

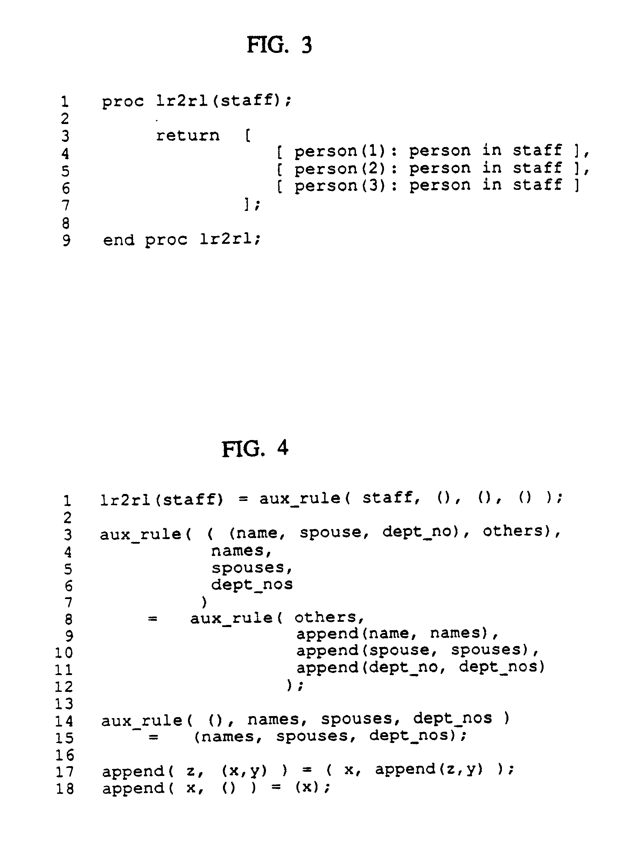

## Production of Structured Values using SETL: Fig. 3

More promising approaches to the production of one structured value from another structured value have been developed in certain high-level languages designed to operate on special structured types. One such high-level language is SETL, which operates on sets. SETL is described in J. Schwartz, et al., Programming with Sets - An Introduction to SETL, Springer-Verlag, 1986. SETL has built-in operators for operations on sets and tuples (ordered sets). Both records and lists may be dealt with in SETL as tuples. Among the operators are operators specifying the construction of sets and tuples, operators specifying the selection of members of the sets, and operators specifying iteration over the members of a set or tuple. These operators permit great clarity and economy in specifying certain aspects of producing one value from another, as may be seen from Fig. 3, which shows a SETL function "lr2rl" which does the same thing as the C procedure of Fig. 2, i.e., produces a value of type EMP_DATA from a value of type STAFF.

In the notation used in SETL, the square brackets "["and "]" indicate a constructor which constructs a tuple from the contents of the brackets; the function thus returns the tuple specified by the material between the square bracket on line 3 and the square bracket on line 7. The notation

tuple_name (i)

indicates the selection of the ith element of the tuple indicated by "tuple_name"; thus, "person(1)" of line 3 selects the first element of the tuple "person". Since the tuple "person" is presumed to have the type PERSON, "person(1)" selects the element identified in the type declaration of Fig. 1 as "name". The notation

[ element_name(i) :element_name in tuple_name]

constructs a tuple whose elements are the elements selected by "element_name(i)" from each element "element_name" of the tuple "tuple_name". Thus,

[person(1): person in staff]

at line 4 of Fig. 3 makes a tuple each of whose elements is the first element of each "person" tuple in the "staff" tuple. The first element of each "person" tuple is of course the "name" component, and consequently, the tuple produced by the constructor is equivalent to the list "names" produced by the C program at line 13 of Fig. 2. The other constructors at lines 5 and 6 make corresponding tuples, and the tuple returned by the SETL function of Fig. 3 is therefore exactly equivalent to the value of "emp_data" returned by the C function of Fig. 2.

While the SETL function is vastly clearer and more concise than the C function, it still has at least two problems. The first problem is that SETL is not really a declarative language for defining production of one structured value from another, but instead a procedural language with special operators for sets and tuples. A consequence of this fact is that a reader of a SETL procedure which uses "lr2rl" cannot determine from the form of the reference to "lr2rl" in the procedure whether "lr2rl" produces a new value from its argument or does some other kind of operation. The second problem is that SETL clearly shows the structure of the value being produced (the *destination* value), but does not clearly show the structure of the value from which that value is being produced (the *source* value). Thus, it is clear from Fig. 3 that the destination value is a tuple of three tuples, and that each tuple of the three tuples is made using values from "person". However, the only way a reader of Fig. 3 can determine the position of those values in the structure of "person" is by locating and reading the type definition for "person".

## Production of Structured Values Using a Logic Proramming Language:

### Fig.4

Logic programming languages are a class of languages which are used in expert systems applications. The languages do not specify algorithms, but instead rules which are to be applied to a data base of information. A rule has the form

predicate--> body

The "predicate" specifies a condition and the "body" specifies an action which is executed when the predicate is true. A logic program is executed by applying the set of rules making up the program to a data base of information. Each time information is found in the data base which satisfies the predicate of one of the rules, the body of that rule is executed. Execution continues until all of the rules have been applied to the entire data base.

Logic programming languages generally permit the body of a rule to refer to another rule. For example, if information in the data base satisfies the predicate, a possible action for the body to take is to apply another rule to all or part of the information. Further, the reference may be recursive, i.e., the body of a rule may refer to the rule itself. A common action in such a case is to apply the rule to an item of information, and if the item satisfies the predicate, recursively applying the rule to a part of the item.

As may be seen from the foregoing, a rule could be used to produce one structured value from another. If a rule is constructed whose predicate will be satisfied by every source structured value and the action specified in the body is the production of the destination structured value from the source structured value, the application of the rule to the source structured value will always result in the production of the destination structured value from the source structured value.

Fig. 4 shows "lr2rl" as it would appear written as a rule in the logic programming language EQU/LISP.M. EQU/LISP.M is a dialect of the list processing language LISP which has been especially adapted for logic programming. EQU/LISP.M is explained in M. O'Donnell, Equational Logic as a Programming Language, the MIT Press, 1986. In EQU/LISP.M rules are expressed by means of a predicate on the left-hand side of the " = " sign and a rule body on the right-hand side of the " = " sign. A name representing a value which appears on both sides of the " = " sign has the meaning on the right-hand side which it receives on the left-hand side. Thus, in line 1, when "lr2rl" receives as an actual argument the value represented by "staff", the operation indicated on the right-hand side of the rule is performed on that value. A further feature of this version of "lr2rl" is the use of auxiliary rules; the body of the rule in line 1 consists of another rule, "aux__rule", which is defined at lines 3-15. "aux__rule" itself is defined using another auxiliary rule, "append", which is defined at lines 17 and 18. "aux__rule" and "append" both have two definitions. The first definition of "aux__rule" is at lines 3-12; the second is at lines 14 and 15. The respective definitions of "append" are at lines 17 and 18. As is characteristic of logic programming languages, which rule is applied depends on the predicate. Finally, the first definitions of "aux__rule" and "append" are recursive.

The complex set of rules of Fig. 4 is required for two reasons: first, as a variant of LISP, EQU/LISP.M processes lists recursively, i.e., it processes a list by applying the predicate to the list, performing the action specified by the body, and then again applying the predicate to the list made up of the remaining elements of the original list. Second, because the list processing is recursive, special rules are required to stop the recursion when the end of the list is reached. Thus, there are two rules named "aux__rule". In both cases, the predicate is applied to four lists. The predicate of the first rule, defined at lines 3-7, requires that the first list be a non-empty list and that the first element of the first list itself have three elements. When that is the case, the rule body, defined at lines 8-12, is executed. The rule body applies the rules named "aux_rule" to the list consisting of the remaining elements of the first list and adds the elements of the first element of the first list to the lists "names", "spouses", and "dept_nos". As long as elements remain in the first list, the result of the application of the predicates of the two "aux_rule" rules to the remaining elements is the execution of the body of the first "aux_rule". The effect of the execution of the body of that rule on each element of the list is to walk down the list specified by "staff" one element at a time. As an element is processed, the component elements "name", "spouse", and "dept_no" are added to their respective lists. The recursion ends when there are no more elements in "staff". At that point, the predicate for the first "aux_rule" rule, defined at lines 3-13 is no longer satisfied, and the body of the rule is not executed. The predicate of the second "aux_rule" rule, defined at line 14, is, however, satisfied by a first list which is empty, and consequently, the body of the second "aux_rule" is executed. That body simply returns the three lists "names", "spouses", and "debt_nos" which were constructed by the recursive execution of the first "aux_rule" rule.

The two "append" rules work in the same general fashion. The predicate of the first rule, defined at line 17, is satisfied as long as there are elements remaining in the list the rule is applied to. The body of the rule simply makes a new list which consists of the first element of the list which was received as an argument and the result of the recursive invocation of the "append" rules. The effect is to reconstruct the existing list until the last element of the list is reached. At that point, the predicate of the second "append" rule is satisfied, and the body of that rule adds the element to be added to the existing list to the end of the list.

As is clear from the foregoing, about the only advantage which is offered by the use of programs written in logic programming languages to produce structured values is the clarity of the "predicate" - "rule body" notation. However, the use of such a notation where the predicate will always be satisfied, as in the main rule "lr2rl(staff)", contradicts the usual purpose of logic programming languages. Moreover, the recursive handling of lists by logic programming languages and the need for special rules to terminate the recursion add a degree of obscurity and complexity to the overall program for producing the structured values which more than offsets the clarity of the "predicate" - "rule body" notation. Finally, the need of implementations of logic programming languages to provide for applications of several predicates to an argument and the use of recursion as the standard method of dealing with lists results in the generally inefficient execution of programs written in the languages.

As may be seen from the foregoing, the programming art needs, but does not yet have, a way of clearly and concisely specifying the production of a structured value from a set of component values; it is a purpose of the invention claimed and disclosed herein to provide such a technique.

## Summary of the Invention

The invention is a method practiced in a computer system for providing instructions to the computer system which specify production of components of a second structured value stored in the computer system from components of a first structured value stored in the computer system. In the method, a rule application specification which is stored in the computer system and which includes a reference to the first structured value and to a production rule stored in the computer system is applied to provide the instructions. The production rule defines how destination components of any second structured value which has the same structure as the second value are to be produced from source components of any first structured value which has the same structure as the first value. The production rule includes a first part specifying the source components and a second part specifying how the source components are to be employed to produce the destination components. The instructions specify components of the first value corresponding to the source components as the first components and components of the second value corresponding to the destination components as the second components.

Other aspects of the invention include the use of a first part and a second part in the production rule. The first part specifies which components of the any first structured value are the source components and the second part specifies how those components are to be used to produce the destination components. The source components are indicated in the first part by means of component names; the compontent are then employed in the second part to indicate how the source components are used to produce the destination components. The instructions further specify that the components of the first value corresponding to the source components indicated by the component names as employed in the first part be used as specified by the component names as employed in the second part to produce the components of the second value.

In another aspect of the invention, type declarations which define structures for the first value and the second value are applied to the production rule to determine from the type declarations and the first part and the second part whether the production rule defines a permissible production and to determine from the type declarations, the production rule, and the rule application specification, whether the second value may be produced from the first value according to the rule. Finally, the instructions further specify a check to determine whether the first value is structured as required by the type thereof.

In a still further aspect of the invention, the production rule may refer to other rules. The references to the other rules are in the second part and indicate both the other rules being applied and the names of the components to which the other rules are to be applied. The references to the other rules may be recursive. A production rule may further contain multiple rule bodies. Which rule body is applied is determined by the value of a component of the first value.

Another aspect of the invention is a novel method for providing instructions specifying an operation on one or more first components of a first structured value stored in the computer system when the first component is part or all of a second component of a first set of second components of the structured value. The method provides the instructions by applying an operation specification which includes a first components specifier for specifying the first components. The first components specifier includes a first set specifier for specifying the first set, a range specifier associated with the second set specifier for specifying a first subset of the second set to which the second components which the first components are part of belong and defining a first subset identification symbol for identifying the first subset, a component name representing any of the first components, and a first individual component specifier employing the first subset identification symbol, and the instructions specifying that the operation be performed on the first components which are part of the second components belonging to the first subset.

In a further aspect of this method, the second set may have varying numbers of elements and the range specifier may include a value which is bound at run time to the actual number of elements in the second set. Further, the second set may be ordered and the range specifier may specify the order in which the second components are to be taken from the subset and thereby specify the order in which the operation is to be performed on the first components.

These and other features and improvements of the invention will appear from the following detailed description of an illustrative embodiment.

### Brief Description of the Drawing

Fig. 1 shows a declaration of various types which are employed in the discussion of the prior art and the disclosure of the invention;

Fig. 2 shows a C function for performing an example production of one structured value from another;

Fig. 3 shows a SETL function for performing the example production;

Fig. 4 shows a EQU/LISP.M function for performing the example production;

Fig. 5 shows an example production rule of the present invention;

Fig. 6 shows an example rule application specification of the present invention;

Fig. 7 is a flow chart of the method of the present invention;

Fig. 8 shows a first declaration of various types which are important for the subsequent discussion;

Fig. 9 shows a second declaration of various types which are important for the subsequent discussion;

Fig. 10 shows a second example production rule of the present invention;

Fig. 11 shows a subrule of the present invention;

Fig. 12 is a block diagram of the apparatus for producing structured values of the present invention; and

Fig. 13 is a diagram of a portion of a rule parse tree employed in the present invention.

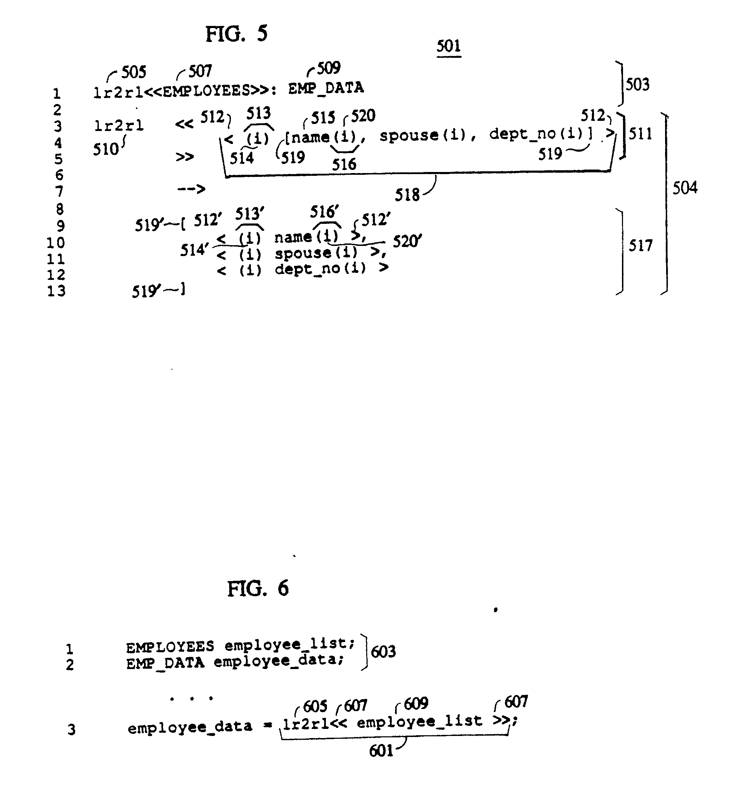

Reference numbers in the following discussion have two parts. The rightmost two digits refer to the number of the item being referenced in the first drawing in which it appears; the remaining digits refer to the first drawing. Thus, an item with the reference number "501" will first appear as item "501" in Fig. 5.

## Detailed Description

The following detailed description of a preferred embodiment of the invention will first describe the form of a preferred embodiment of the production rule and the rule application specification, will then discuss methods and apparatus for the production of structured values using the production rule and the rule application specification, and will conclude with a discussion of complex production rules.

### Form of the Production Rule: Fig. 5

Fig. 5 shows the function "lr2rl" as it would be written using a preferred embodiment of the production rule. As previously indicated, "ll2rl" produces a value of the type EMP_DATA from a value of the type EMPLOYEES. The two types are shown in Fig. 1.

Production rule 501 has two main parts: rule declaration 503 on line 1 and rule body 504 on lines 3-13. Rule declaration 505 specifies the rule's name, the type of a source value, and the type of a destination value. The source value is the value from whose components the destination value will be produced. In Fig. 5, rule name 505 is "lr2rl"; source value type 507 is "EMPLOYEES", and destination value type 509 is "EMP_DATA". In a preferred embodiment, rule name 505 is first; then come source value type 507 enclosed in double angle brackets and destination value type 509 following a colon; other syntactical arrangements are of course possible. Rule 501 of Fig. 5 has only a single source value type 507 and destination value type 509; in a preferred embodiment, a rule 501 may specify that a destination value be produced from more than one source value; in such a case, there must be a source value type 507 for each of the source values. In a preferred embodiment, there is only one destination value; however, in other embodiments there may be more than one destination value, and in that case there will be more than one destination value type 509.

Rule body 504 specifies how the destination value is to be produced from the source value. Rule body 504 begins with rule body name 510, which identifies which rule declaration 503 rule body 504 is associated with. In a preferred embodiment, rule body name 510 is the same as rule name 505 in rule declaration 503 with which rule body 504 is associated. Following rule body name 510 is left-hand side 511, which specifies which components of one or more source values are to be employed to produce the destination value. In a preferred embodiment, the entire left-hand side 511 is set off with double angle brackets. Inside the double angle brackets is a collection of one or more component specifiers 518, one for each of the source values. In Fig. 5, there is only one source value, and consequently, there is only one component specifier 518. Components to be used to construct the destination value are specified within each component specifier 518 by means of component names 515. The scope of a component name 515 is left-hand side 511 and right-hand side 517 of rule 501. If the component is a part of a structured value, its position within the structured value is indicated by means of various structure specifiers. The structure specifiers in Fig. 5 include list specifier 512 and record specifier 519, which indicate lists and records in the same fashion as explained with regard to the type declarations of Fig. 1, range specifier 513, which specifies a set of elements belonging to a list, and element selector 516, which specifies individual elements from a set of elements. Other syntax for structure specifiers is of course possible.

As indicated by structure specifiers 512 and 519, the source value is a list whose elements are records. Each record contains three component values. The components of the source value which will be used to produce the destination value are specified by means of component names 515. The type of a component identified by a component name 515 is determined from the position of component name 515 in right-hand side 511. Here, "name" is the first component of the record which is the element of the list type "EMPLOYEES" represented by right-hand side 511. Looking at types 101, the reader of rule 501 can determine that "name" has the "STRING" type. In a preferred embodiment, each component name 515 in left-hand side 511 must be unique within left-hand side 511.

In Fig. 501, all of the component names 515 specify non-structured values; a component name 515 may, however, also specify a structured value. For example, the elements of the list in left-hand side 511 could be given the name "person"; in that case, left-hand side 511 would look like this:

<(i) person(i): [name(i), spouse(i), dept_no(i)]>

If "person" appeared in right-hand side 517, it would represent an entire element of the list. Moreover, in a preferred embodiment, components of the source values which will not be involved in the production specified by rule 501 may be given non-unique names in left-hand side 511. The non-uniqueness of these names distinguishes them from component names 515.

When a component name 515 represents a component of a list element or the entire list element, component name 515 must be accompanied by an element selector 516. Element selector 516 in a preferred embodiment is a pair of parentheses "(" and ")" containing one or more expressions which have positive integer values. The integer values specify elements of lists. For example, "name(1)" would specify the component identified by "name" in the first element of the list identified by "<" and ">" in left-hand side 511. In values of type "EMPLOYEES", there is only a single level of lists; consequently, there is only one such expression in element selector 516, namely "i". Where a list includes elements which themselves have lists as components, i.e., where there are nested lists and a component name 515 represents a

8

component of a nested list, there must be an integer expression specifying an element of each of the nested lists.

The expression "i" 520 in element selector 516 of Fig. 5 is of particular interest. "i" 520 is a range element selector. When an element selector 516 associated with a component name 515 contains a range element selector 520, then each component represented by component name 515 in a range of list elements will be used to produce the destination value. Range element selector 520 is defined in range specifier 513 associated with the list from which the range of elements is selected. In a preferred embodiment, range specifier 513 "(i)" indicates that range element selector 520 "i" will specify the component indicated by component name 515 associated with the element selector 516 containing range element selector "i" 520 in each of the elements of the list with which range specifier 513 is associated and that range element selector 520 will specify the elements in the order in which they occur in the list. As will be explained in more detail below, a range specifier 513 may further define a subset of the elements of a list and define the order in which the components from the elements will be used to produce the destination value. *Subset* as used here and in the following includes a subset which includes all of the members of the set it is a subset of. The scope of a range element selector 520 in a preferred embodiment is restricted to the list with which range specifier 513 defining range element selector 520 is associated. Thus, in Fig. 5, range specifier 513' in line 10 of right-hand side 517 defines a range element selector 520' "i" which is different from range element selector 520 "i" defined on left-hand side 511.

Looking at left-hand side 511 in light of the above, it may be seen that each component of the elements of the list in "EMPLOYEES" is specified by a component name 515, and that consequently, each of the components of selected elements of the list will be used to produce the destination value. Further, the presence of range element selector 520 in element selector 516 associated with each of the component names 515 indicates that, as indicated by range specifier 513 in which range element selector 520 is defined, the elements will include all of the elements in the list and the elements will be selected in order beginning with the first.

Right-hand side 517 defines how the components specified in left-hand side 511 are to be used to produce the value of type "EMP_DATA". In a preferred embodiment, left-hand side 511 is separated from right-hand side 517 by an arrow (line 7). In that embodiment, right-hand side 517 is made up of a single component specifier 518. Within component specifier 518, the components of the source value which will be used in the destination value are indicated by the component names 515 defined in left-hand side 511 and the structure of the destination value is indicated by structure specifiers as required by that structure. The right-hand side is thus effectively a constructor which constructs a value having the structure indicated by the structure specifiers using the component values specified by component names 515. In right-hand side 517, there are list specifiers 512' and record specifiers 519', together with range specifiers 513' and element selectors 516'.

List specifiers 512' and record specifiers 519' have the same meanings as set forth in the discussion of left-hand side 511; thus, the destination value is seen to be a record whose components are three lists. Component names 515 from left-hand side 511 appear in right-hand side 517 between the list specifiers 512', indicating that the components of the source value represented by the component names 515 are to be used as elements of the lists in the destination value.

In a preferred embodiment, range specifiers 513' associated with component names 515 on right-hand side 517 define ranges relative to the ranges defined for the elements to which the component names belong on left-hand side 511. As previously mentioned, range specifier 513 in left-hand side 511 indicates that component values indicated by component names 515 are to come from all elements of the source value's list and that the components are to be taken from the elements in the order in which the elements occur in the list. Range specifier 513' "(i)" associated with "name(i)" on right-hand side 517 indicates that the list in the destination value which is to be made from the components of the source values represented by "name" is to be made by taking all of the source values represented by "name(i)" on left-hand side 511 and adding them to the list in the order in which the elements of the list to which the component values belong occur in the source value. It should be noted in this regard that, as on left-hand side 511, the scope of a range element selector 520' is the list for which it is defined; thus, each of the range element selectors 520' "i" defined at lines 10, 11, and 12 is independent of the others and independent of the range element selector 520 "i" defined in left-hand side 511. As will be explained in more detail below, range specifiers 513' on right-hand side 517 may specify a subset of the values specified by the range specifier 513 on left-hand side 511 and may also specify that the values be used in an order different from the order they have in the source value.

Once the foregoing is understood, it can be seen from Fig. 5 that production rule 501 clearly and concisely describes how a value of type "EMP_DATA" is to be produced from a value of type "EMPLOYEES". List specifiers 512 in left-hand side 511 clearly specify that values of type "EMP_DATA" are lists of records, and that each record has three components. The component names 515 further clearly specify that it is values from the three record components which will be employed to make the destination value. The range specifier "(i)" 513 and the element selector 516 "(i)" further specify that the destination value will be made from values taken from all of the elements in the source value's list and that the values will be provided in the order in which the list elements occur in the source value.

Right-hand side 517 specifies with equal clarity and conciseness how the destination value is to be produced from the components of the source value specified by left-hand side 511. The record specifiers 519' indicate that the destination value is a record which has three lists as its components, and that each list has as its elements single primitive values. Component names 515 in right-hand side 517 indicate how the values represented by the component names in left-hand side 511 are used in the destination value. Thus, values from the first component of each record of the source value make up the first list of the destination value, values from the second component of each record of the source value make up the second list of the destination value, and so on. The range specifiers 513' and range element selectors 520' on right-hand side 517, finally, indicate that the lists of the destination value will include values from every record in the source list and the order of the values in each destination list will correspond to the order of the list elements in the source list.

Continuing with the discussion of range specifiers 513, as indicated above, range specifier 513 "(i)" specifies all of the elements of the list with which it is associated. The syntax

(range_element_selector)

is a shorthand form of the full range specifier. In a preferred embodiment, full range specifier 513 has the form:

(range_element_selector: range_exp to range_exp)

"range element selector" is of course range element selector 520; "range_exp" is an expression with an integer value. The set of list elements defined by range specifier 513 is the set of elements which includes the list element specified by the first range_exp, the list element specified by the second range_exp, and all of the elements between those elements in the list. For example, the range specifier 513

< (i:1to4) name(i)>

specifies the subset of the elements of the list in "EMPLOYEES" consisting of elements 1 through 4. The "range_exp" may include a non-numerical range symbol which indicates that "range_exp" is to be computed at run time from the actual number of elements in the list in the first value. Consequently, construction rule 501 can be used with source values which contain lists of varying length. For instance,

<(i: 1 to n) name (i)>

indicates that the set represented by "name (i)" includes components from the first through the last element of the list of the first value, i.e., consists of the component represented by "name" from all of the elements of the list. The meaning of the above range specifier is thus identical to that of the shorthand range specifier 513 "(i)". By the same token,

<(i: n-5 to n) name (i)>

indicates that the set represented by "name (i)" includes only the components represented by "name" from the last six elements of the list. In other embodiments, range specifier 513 may specify the set of list elements by means of a list of ranges or individual index expressions. Again, other syntax for range specifier 513 is possible. In a preferred embodiment, range specifier 513 may further indicate the order in which the subset of components specified by range specifier 513 is to be used to produce the destination value. For example, the following would indicate that the list to be produced from the set of values represented by "name(i)" on right-hand side 517 is to be constructed in reverse order from the list from which the values were taken:

<(i:n to 1) name (i)>

In a preferred embodiment, the following limitations are placed on the use of range specifiers 513 in left-hand side 511 and right-hand side 517:

- In left-hand side 511, the range specifier must specify all of the elements of the list it is associated with and can specify only first-to-last order, i.e., the only permitted range specifiers are (range_element_specifier: 1 to range_symbol) and its shorthand equivalent.
- In right-hand side 517, range specifier 513' associated with a component name 515 may specify a subset of the elements of the list to which the component belongs and may specify the order in which they are to be used to construct the destination value.

## Form of the Rule Application Specification: Fig. 6

Fig. 6 shows a rule application specification for the rule "lr2rl" as it might appear in a program in which structured values are converted using the rule. The structured values are represented in Fig. 6 by the variables declared in declarations 603. Each declaration 603 specifies the name of the variable's type and the name of the variable; consequently, "employee_list" represents a value of type "EMPLOYEES", and "employee_data" represents a value of type EMP_DATA. Rule 50l referred to by rule application specification 601 returns a value of type "EMP_DATA" when it receives a value of type "EMPLOYEES". Consequently, rule application specification 601 takes such a value, namely the variable "employee_list", as an actual argument, and appears in line 3 of Fig. 6 on the right-hand side of an assignment statement which has the variable "employee_data" of the type "EMP_DATA" on its left-hand side. The value of type "EMP_DATA" returned by rule application specification 601 is thus assigned to "employee_data". The parts of rule application specification 601 are the following: rule name 605 is the name of the production rule being applied; it is the same as rule name 505 in rule declaration 503; angle bracket pairs 607 enclose actual argument 609. In a preferred embodiment, the actual argument may be a variable or a literal value of the proper type or a constructor which constructs a value of the proper type out of variables and/or literals. In other embodiments, any expression whose result has the proper type may be used as an actual argument. In a preferred embodiment, double angle brackets 607 distinguish rule application specification 601 from constructs such as function and procedure calls. As elsewhere, other syntax is possible. For example, in other embodiments, rule application specification 601 might not return a value, but instead require an actual argument for the destination value as well as for the source values. Moreover, other synta other syntax might be used to distinguish rule application specification 601 from other constructs.

## Producing a Structured Value Using Rule 501

As is well known in the computer arts, there are many techniques for causing a computer to execute a program, i.e., to perform the actions specified in the source text of a program. At one extreme, there is compilation, in which a compiler program processes all of the source text of the program to be executed to produce an object program in the instruction set of the computer which is the equivalent of the source text. The computer then executes the program specified in the source text by executing the object program. At the other extreme, there is interpretation, in which an interpretation program starts at the beginning of the source text, and when it has enough information to specify the first action indicated in the source text program, it executes a portion of the interpretation program which employs the information from the source text to cause the computer to perform the first action. It then repeats the process for the second action, and so forth. Other possibilities fall in between these two. For example, a compiler might produce an object program in intermediate instructions and an interpreter might then interpret the object program. Any of the techniques can be used for any program, and the selection of a technique is governed by trade-offs such as simplicity of implementation versus speed of execution or memory space versus execution time.

The method of the invention is practiced in a preferred embodiment in an environment which is designed to facilitate the production of programs from high-level specifications. One of the characteristics of the environment is powerful software routines for the production of parse trees from source code, for reading the parse trees, and for manipulating the parse trees. Parse trees and the techniques for producing and manipulating them are well-known in the art and are described in standard texts including Aho, Sethi, Ullman, Compilers: Principles, Techniques, and Tools, Addison-Wesley Publishing Company, Reading, MA, 1986.

The method of the invention takes advantage of the parse tree routines available in its environment by producing parse trees from the source text for the type declarations for the types of the source and destination values, parse trees from the source text for rule 501, and parse trees for programs containing rule application specifications 601 . The parse trees are then read by tree checking routines to ensure that rule 501 describes a permissible production of the destination value from the source value, to ensure that the source value has the proper type, and to ensure that the source value conforms to its type. The destination value, finally, is produced by tree interpretation routines which employ the parse tree for the program containing the rule application to locate the source value components and uses the rule tree to produce the destination value from the source value components.

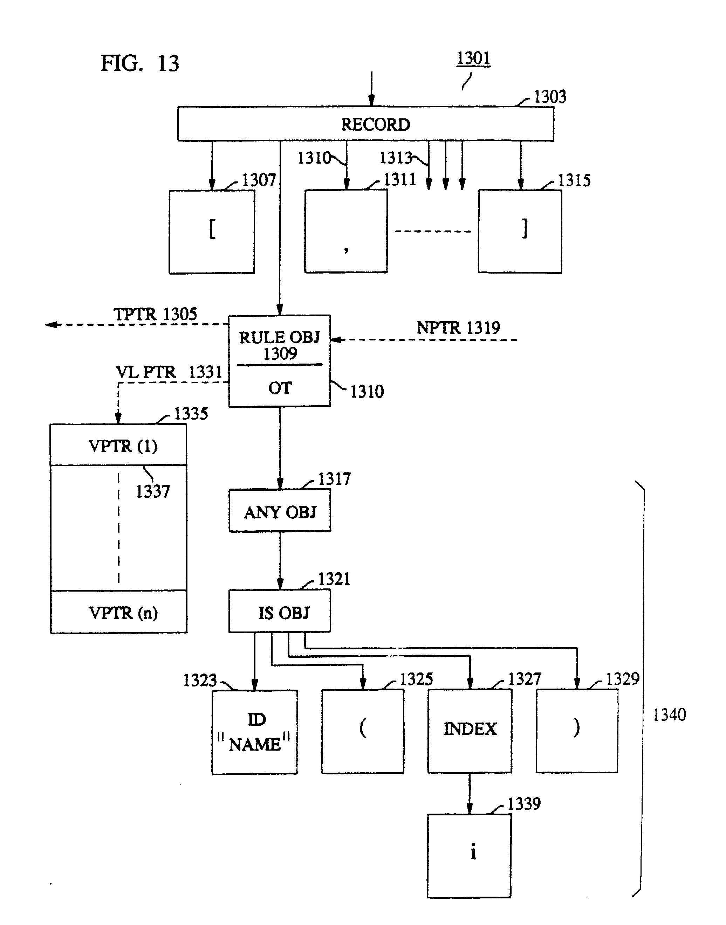

## Parse Trees in a Preferred Embodiment: Fig. 13

Fig. 13 is a diagram of a portion of the parse tree representing rule 501. In a preferred embodiment, the parse tree representing rule 501 includes two subtrees, one representing left-hand side 511 and the other representing right-hand side 517. Parse tree portion 1301 of Fig.13 is a part of the left-hand side subtree of the parse tree for rule 501. Portion 1301 represents the record which makes up the elements of the list of type "EMPLOYEES". As explained in the Aho text cited above, a parse tree for a construct from the source text of a program has nodes for all of the terminals and non-terminals from the BNF of the language which are required to define the construct. In the tree of Fig.13, the terminals are the leaf nodes of the tree; as may be seen by comparing the leaf nodes with line 4 of Fig. 5, the leaf nodes correspond to

[name(i),...]

Beginning at the root of the tree, record node 1303 indicates that its children define a record data type. The children of record node 1303 include node 1307, representing the "[" indicating the beginning of a record type, rule object node 1309, representing the first field of the record type, and indicating here that the field includes a name, node 1311, representing the "," field separator, nodes 1313 (not shown) representing the other fields of the record, and node 1315, representing the "]" indicating the end of the record.

Rule object node 1309 includes object tag (OT) field 1310, which indicates the kind of object represented by subtree 1340. In Fig. 13, OT field 1310 indicates that subtree 1340 is of type any object and therefore includes a component name 515. Rule object node 1309 also includes a number of annotations, i.e., pointers to and from other portions of the type and rule trees which contain information relevant to subtree 1340. The annotations may be added either when subtree 1301 is produced or when it is interpreted to produce the destination value. In Fig. 13, there are three such annotations, indicated in the figure by dashed arrows. Type pointer (TPTR) 1305 is a pointer to the node in the type tree which contains the type definition for the component of the source value represented by "name"; name pointer (NPTR) 1319 is a pointer from a node of the subtree for right-hand side 517 which employs the component name 515 "name" to represent a component of the destination value. Pointers 1305 and 1319 are both added to subtree 1301 when the parse tree for rule 501 is produced.

Value list pointer (VLPTR) 1331 is a pointer to a table 1335 which contains pointers to the locations in the source value of the values represented by the component name 515 represented by subtree 1340. Each element 1337 of the table is a pointer to one of the values, and the pointers are arranged in the order of the elements in "EMPLOYEES". In a preferred embodiment, rules 501 may be invoked recursively, and in such cases, the annotation may include a chain of tables 1335. Each table in the chain represents one invocation, and the tables are ordered as a LIFO (stack). As is apparent from the above description, table 1335 is created and VLPTR 1331 is added to node 1309 when rule 501 is applied to produce a destination value from a source value.

As is further apparent from the above description, annotation is the technique used in the preferred embodiment to bind names to their definitions and values. Thus, the binding of component name 515 "name" to its type is represented by type pointer 1305, the binding of "name" on right-hand side 517 to "name" on left-hand side 511 is accomplished by name pointer 1319, and the binding of "name" to the values it represents is accomplished by value list pointer 1331 and table 1335. As is also clear from the foregoing, the first two bindings occur during the preferred embodiment's analog to compile time, while the third binding occurs during the analog to run time.

Rule object node 1309 has as its only child the node "any object" 1317, that node has as its only child node 1321, which indicates that the field is an indexed symbol object, i.e., that it has an element selector 516. The children of node 1321 are ID node 1323, which represents component name 515 "name", left parenthesis node 1325 and right parenthesis node 1329, which represent the parentheses in "(i)", and index node 1327, which indicates that there is an index value in the parentheses. That value, indicated by child node 1339 of node 1327, is "i".

Another feature of parse table 1301 for rule 501 is that it functions as a distributed symbol table. In general, when an assembler, compiler, or interpreter reads source text, it constructs a table of the names (symbols) which are defined in the source text. Each symbol has an entry in the table, and the entries contain information about the symbol. For example, a symbol table entry for a name which represented a variable would typically include the variable's type and some specification of the variable's location in memory. In parse tree portion 1301, no symbol table is ever constructed; instead, when a portion of the parse tree represents a component name, as is the case with the portion dependent from node 1309, the information which would normally be included in the symbol table is reached by following pointers to or from node 1309. Thus, the type information for "name" is accessible via pointer 1305 from node 1309, while there is a pointer 1319 from the node for "name" in right-hand side 517 to node 1309, and val__list ptr 1331 from node 1309 to table 1335. In other embodiments, of course, the pointers may point from or to other nodes in the subtree. For example, all of the annotation pointers may point to or from node 1323.

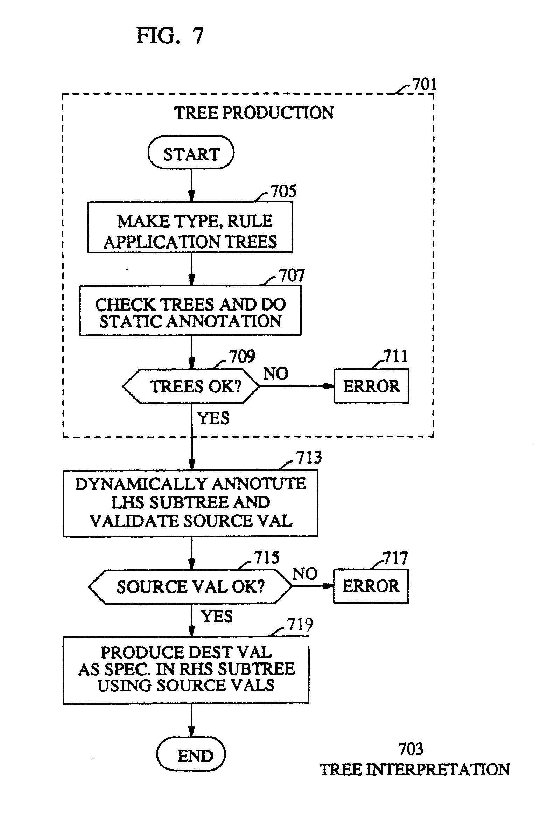

## Method of Producing the Destination Value: Fig. 7

Continuing with Fig. 7, that figure is a flow chart for a preferred embodiment of the invention. There are two phases of operation: tree production 701 in which the parse trees representing the type declarations, rule 501, and the program containing rule application 601 are made and checked, and tree interpretation phase 703, in which the purse tree representing rule 501 is applied to the parse tree representing rule application 601 to produce the destination value from the source value. The two phases correspond to compile time and run time in standard programming environments. The method of Fig. 7 begins with step 705, in which a program termed herein the tree builder reads the source texts for the type declarations involved in rule 501, for rule 501 itself, and for the program containing rule application 601, and constructs parse trees from the source texts.

The next step, 707, is performed by a component called the tree checker. The tree checker examines the trees produced by the tree builder and determines whether the types of the source and destination values permit the production specified in rule 501 and whether the types of the values specified in rule application 601 are those required for rule 501. If these checks do not succeed, the tree checker generates an error message, as indicated by decision box 709 and error box 711. The tree checker further annotates the trees representing left-hand side 511 and right-hand side 517 with pointers 1305 to the components of the tree for the type definitions which define the types which are relevant to the production of the destination value from the source value and pointers 1319 from nodes on the right-hand subtree of the tree for rule 501 using component names to the nodes 1310 on the left-hand subtree which have subtrees 1340 defining the component names.

The steps in tree interpretation phase 703 are performed by a component called the tree interpreter. The tree interpreter first applies the portion of the tree for rule 501 which represents left-hand side 511 to the tree for rule application 601. The tree interpreter determines from that tree where the components represented by component names 515 in left-hand side 511 are located and annotates the rule tree by building a pointer table 1335 for each of the component names 515 in left-hand side 511. In the course of examining the source value as required to build pointer table 1335, the tree interpreter is also able to determine whether the source value in fact conforms to its type declaration. If it does not, the tree interpreter generates an error message, as indicated by boxes 715 and 717.

When the annotation of the portion of the rule tree representing left-hand side 511 is finished, the tree interpreter uses the portion of the rule tree representing right-hand side 517 to construct the destination value. The destination value is constructed bottom up, i.e., when a structured part of the destination value includes components represented by component names 515, the tree interpreter obtains the components indicated by the name from the source value, constructs the structured part from the components, and returns the structured part to be used in constructing the next level of the destination value. The tree interpreter locates the component values corresponding to a component name 515 by following name pointer 1319 from the node for the component name in the tree for right-hand side 517 to the node for the component name in the tree for left-hand side 511, using value pointer table 1335 to locate the values, and copying the values to the destination value as required by right-hand side 517. For example, in interpreting rule 501 of Fig. 5, the tree interpreter takes the component values specified in value pointer list table 1335 and uses them to make the list

<(i)name(i)>

as indicated by line 10 of right-hand side 517. It does the same with the values specified in the value pointer lists 1335 for "spouse" and "dept_no", and then makes a record out of the three lists. As indicated in the discussion of range specifiers 513, range specifiers 513 on right-hand side 517 may specify that the destination value be constructed from less than all of the values from the source value's list and that the values in the destination value be ordered in a different manner. The tree interpreter deals with these matters by taking values from the set of values specified by the relevant pointer list 1335 in the fashion specified by the relevant range specifier 513 on right-hand side 517.

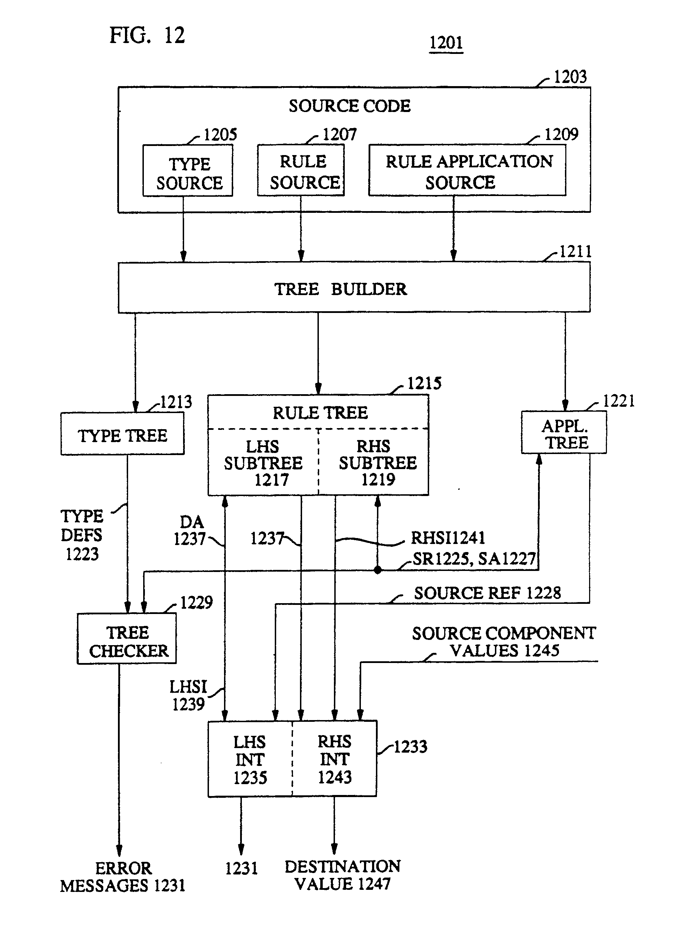

A general problem with the production of structured values is the situation in which a destination value is being constructed from more than one source value, the destination value requires that all source values have the same number of elements, and the source values in fact have different numbers of elements. The problem is solved in a preferred embodiment by making the number of elements in the destination value equal to the greatest number of elements in the source values and using null values in place of the missing values. **Apparatus for Producing a Structured Value Using Rule 501: Fig. 12**

Fig. 12 is a block diagram of apparatus 1201 for producing a structured value. The components of apparatus 1201 are the following:

- Source Code 1203, which includes
  - source text 1207 for rule 501;
  - source text 1209 for a program containing rule application 601;
  - source text 1205 for the type definitions 101 for the types of the source and destination values;
- Tree Builder 1211, which constructs parse trees from source code 1203; The parse trees constructed by tree builder 1211:
- type tree 1213, constructed from type source 1205;
- rule tree 1215, constructed from rule source 1207 and including left-hand side subtree 1217 and right-hand side subtree 1219;
- application tree 1221, constructed from rule application source 1209.
- Tree checker 1229, which checks trees 1213, 1215, and 1221 for consistency, annotates them as described above, and generates error messages 1231 if portions of the trees do not agree with each other or relevant portions of other trees; and
- Tree interpreter 1233, which applies rule tree 1215 to the source value specified by application tree 1221 to produce destination value 1247. Interpreter 1233 has two subcomponents:
  - left-hand side interpreter 1235, which annotates the left-hand side subtree with table 1335, and
  - right-hand side interpreter 1243, which uses the values specified by the pointers in table 1335 to produce destination value 1247 as specified in right-hand side subtree 1219.

Flow of data among the components of apparatus 1201 is indicated by arrows; thus, tree builder 1211 accepts the parts of source code 1203 and builds parse trees 1213, 1215, and 1221. Tree checker 1229 reads type definitions 1223 from type tree 1213 and further reads type references 1225 from application tree 1221 and rule tree 1215 and annotates rule tree 1215 with pointers to the relevant nodes in type tree 1213 and nodes for component names 515 in right-hand side subtree 1219 with pointers to the nodes for component names 515 in left-hand side subtree 1217. The latter operations appear in Fig. 12 as the data flows indicated by static references (SR) 1225 and static annotations (SA 1227) respectively.

Left-hand side interpreter 1235 reads source reference 1228 referring to the source value from tree 1221 , reads left-hand side information 1239 from left-hand side subtree 1217, and annotates left-hand side subtree 1217 with dynamic annotations (DA) 1237 as described above. In a preferred embodiment, the value indicated by source reference 1228 is created by treating the source reference as an actual argument which is passed by value, i.e., a local copy of the data indicated by the source reference is created, and the pointers to the named components of the source value which make up dynamic annotations 1237 are pointers to the local copy of the source reference. In other embodiments, no local copy may be made. In that case, the pointers will be to the original copy of the source reference. If left-hand side interpreter 1235 discovers while obtaining dynamic annotations 1237 that the local copy does not conform to the type description for the source value, left-hand side interpreter 1235 outputs error message 1231. Right-hand side interpreter 1243 uses name pointer 1319 of static annotations 1227 to locate dynamic annotations 1237 in left-hand side subtree 1217, uses right-hand side information 1241 from right-hand side subtree 1219 to determine how the values specified by dynamic annotations 1237 are to be used to produce destination value 1247, retrieves source component values 1245 from the local copy of the source value, and uses

14

them to produce destination value 1247.

In the preferred embodiment, apparatus 1201 is embodied in a standard computer system including a processor, a memory system, and a file system. Source code 1203 and parse trees 1213, 1215, and 1221 are all embodied in files in the file system; tree builder 1211 , tree checker 1229, and tree interpreter 1233 are programs which execute on the processor. The source value and the destination value are both stored in the memory system. While the preferred embodiment employs the components of Fig. 12, other implementations could be constructed. For example, a compiler could read source code 1203 and produce object code from the source code. The destination value would then be produced by executing the object code. In another implementation, an interpreter could interpret source code 1203 to produce the destination value from the source value; in still another, a compiler might generate object code from trees 1213, 1215, and 1221 . Further implementations intermediate to the above possibilities might also be made.

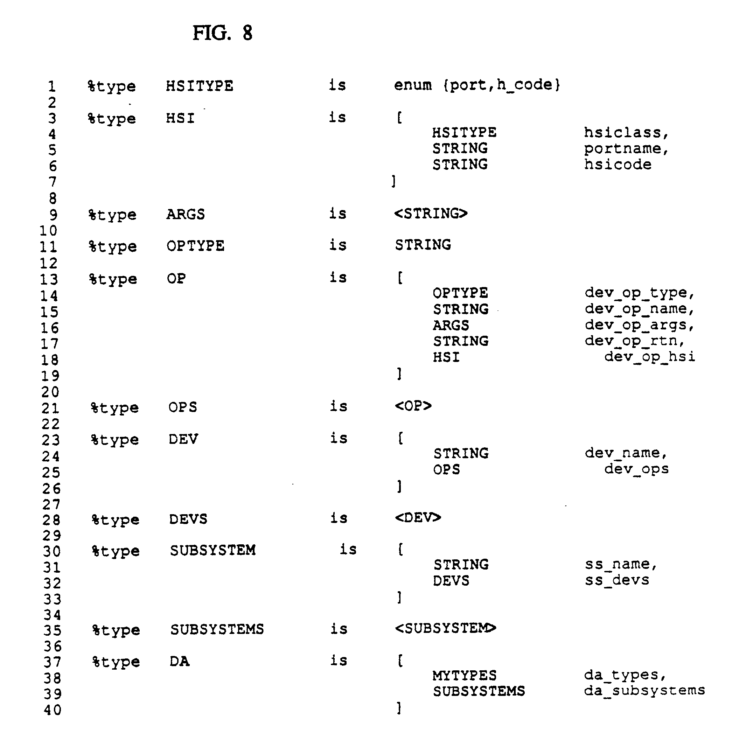

## Complex Rules 501: Figs. 8-11

While the rule "lr2rl" has served to illustrate the fundamental properties of rules 501, a more complex example is required to show other aspects of the invention such as rules 501 which include rule specifications on right-hand side 517 and rules 501 which include multiple rule bodies 504. The source value in the complex example represents a set of device abstractions. The device abstractions are logical descriptions of a computer system's subsystems, the devices making up the subsystems, and the operations which can be performed on the devices. In the computer system in question, the subsystems and devices are implemented by means of processors which control the devices. A command to a device is implemented by means of an interprocessor communication (IPC) to the processor which controls the device. The destination value is an IPC value which describes the controlling processors, the devices, and the interprocessor communications, corresponding to the logical descriptions in the device abstractions. The example rule, "da_to_ipc", specifies the production of an interprocessor communication value from a device abstraction value.

Fig. 8 is the type definition for the device abstraction value. That value has the type "DA", defined at lines 37-40 of Fig. 8. As may be seen there, "DA" is a record with two components, "MYTYPES" and "SUBSYSTEMS". The component value of type "MYTYPES" is simply copied in its entirety from the DA value to the interprocessor communication value, and consequently, its internal structure is of no concern here. The type definition of "SUBSYSTEMS" is at line 35. There, "SUBSYSTEMS" is defined as a list whose elements are values of type "SUBSYSTEM", which is defined at lines 30-33. "SUBSYSTEM" is another record with two components. The first component is a "STRING" which represents the name of the subsystem; the second component has the type "DEVS", which is defined at line 28 as a list whose elements have the type "DEV". That type is defined at lines 23-27 as a record with two components, a "STRING" which represents the name of the device, and a second component, "OPS". That component is defined at line 21 as a list of elements with the type "OP".

"OP" is defined at lines 13-20 as a record with five components. The type of the first component, "dev_op_type", is defined as a string. The string will have one of three values: "read_op", "write_op", and "event_op". The values correspond to three kinds of operations: read operations, write operations, and event operations (event operations are operations initiated by an event such as an interrupt from a device). The second component is a "STRING" which specifies the name of the device operation, the third, as may be seen from the definition of "ARGS" at line 9, is a list of the strings which are the arguments of the operations, the fourth is the string which is returned when the operation is complete, and the fifth has the type "HSI", which represents the interface between the hardware and software. The type is defined at lines 3-6. As may be seen there, "HSI" is a record which has three elements: two strings and "hsiclass", which is an enumeration type, HSITYPE, defined at line 1.

As may be seen from the foregoing, the portions of the DA type which are important for the present discussion include a list of subsystems, each subsystem being defined as a list of devices, each device being defined as a list of operations, and each operation being defined as an operation type, operation name, operation arguments, operation return, and operation HSI.

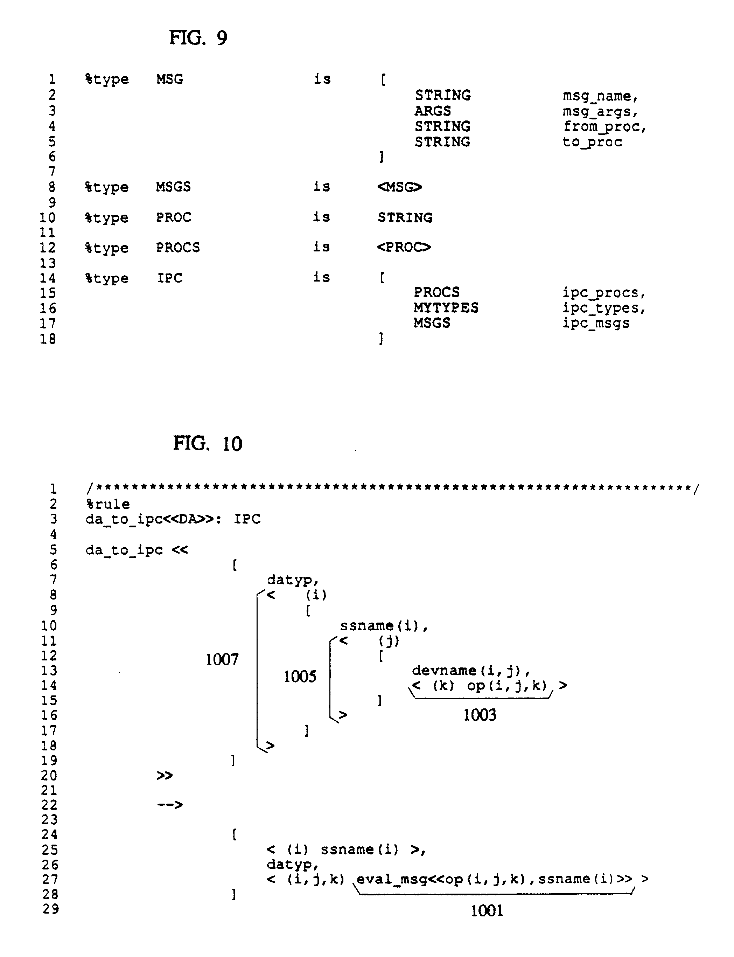

The type of the destination value, "IPC", is defined in the type definitions of Fig.9. As may be seen at lines 14-18 of that figure, "IPC" is a record with three components, "PROCS", "MYTYPES", and "MSGS". As explained above, there is no need to be further concerned with "MYTYPES"; "PROCS" is defined at lines 10-12 as a list whose elements have the type "PROC", indicating a processor, and that type is in turn a string; the type's values are thus a list of processor IDs. "MSGS" is defined at lines 1-8 as a list whose elements have the type "MSG", indicating a message. The components of the message include "msg_name", which is a "STRING" specifying the name of the message, "msg_args", which has the type "ARGS", defined in Fig. 8 as a list whose elements have the type "STRING", and is the arguments for the message specified by "msg_name", "from_proc", which indicates the processor which is the source of the message, and "to_proc", which indicates the processor which is the destination of the message.

A value of type IPC is to be produced from a value of type DA as follows:

* the ipc_procs field of the IPC value is a LIST of STRINGS, one for each SUBSYSTEM in the DA value, with a value equal to the ss_name field of the SUBSYSTEM;
* the ipc_types field of the IPC value has the value of the da_types field of the DA value;
* the ipc_msgs field of the IPC value is a LIST of MSGs, one for each OP in the DA value; the components of each MSG are determined from a corresponding OP value as follows:

msg_name      - has value of dev_op_name field of corresponding OP

msg_args      - has value of dev_op_args field of corresponding OP

from_proc     if (value of dev_op_type is "event")

then from_proc takes its value from the ss_name

field of the SUBSYSTEM associated with the OP

else if (value of dev_op_type is "read")

then from_proc takes its value from the ss_name

field of the SUBSYSTEM associated with the OP

else if (value of dev_op_type is "write")

then from_proc has value "control"

to_proc       if (value of dev_op_type is "event")

then from_proc has value "control"

else if (value of dev_op_type is "read")

then from_proc has value "control"

else if (value of dev_op_type is "write")

then from_proc takes its value from the ss_name

field of the SUBSYSTEM associated with the

corresponding OP.

Fig. 10 shows rule 501 for producing values of type IPC from values of type DA. Aside from complexity, the only difference between the rule 501 of Fig. 10 and the rule 501 of Fig. 5 is subrule specification 1001. A *subrule* is a production rule 501 which is referred to by a subrule specification 1001 in right-hand side 517 of a production rule 501. As implied by the foregoing, a subrule specification 1001 may recursively apply a rule 501 . Subrule specification 1001 occupies a position in right-hand side 517 which specifies a component of the destination value. In this case, as may be seen from the type definition for IPC in Fig. 9, subrule specification 1001 represents a component having the MSG type. The component is produced by applying rule 501 specified by subrule specification 1001, in this case, the rule "eval_msg", to the component values represented by the component names 515 appearing in subrule specification 1001, in this case, the values represented by the component names "op" and "ssname".

As may be seen from range specifier 513 and element selectors 516 in line 27, the rule "eval_msg" is to be applied to each value "op" in the list 1003 of such values which belongs to the first element of list 1005, which list is in turn part of the first element of list 1007. The rule will then be applied to each value "op" in the list 1003 which belongs to the second element of list 1005 in the first element of list 1007, and so forth until the rule "eval_msg" has been applied to all of the values in all of the lists 1003 belonging to all of the elements of the lists 1005 belonging to all of the elements of the list 1007. Each time the rule is applied to the value represented by "op", it will also be applied to the value "ssname" from the element of list 1007 to which the element of list 1005 containing list 1003 to which the value represented by "op" belongs. The capability thus shown in Fig. 10 of using range specifiers 513 and element selectors 516 to specify an operation involving values from different levels of nested lists is a unique advantage of the present invention.

As may be seen from Fig. 10, the syntax of subrule specification 1001 resembles that of rule application specification 601, except that the actual arguments employ component names 515 in the same fashion that rule application specification 601 employs variable names. In a preferred embodiment, the same restrictions apply to the actual arguments in subrule specification 1001 as apply to rule application specification 601; in other embodiments, these restrictions may not apply. The types of the values represented by the actual arguments in subrule specification 1001 must of course be the same as the types specified for the source values in rule 501 referred to by subrule specification 1001. Rule body 504 of the rule 501 referred to by subrule specification 1001 determines how the values represented by the actual arguments used in rule application specification 601 are to be employed to produce the component of the destination value which is specified by subrule specification 1001's position in right-hand side 517 and the type of value produced by the rule 501 specified in subrule specification 1001.

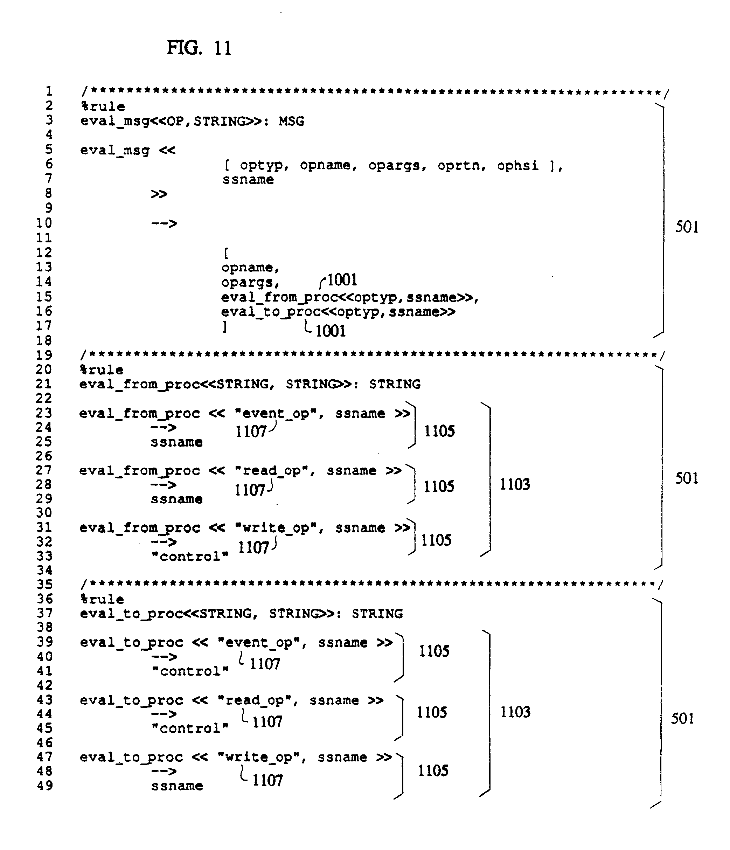

Rule 501 corresponding to subrule specification 1001 is defined at lines 1-18 of Fig. 11. As may be seen from rule declaration 503 for the rule, "eval_msg" is an example of a rule which takes more than one source value. "eval_msg" takes values of types "OP" and "STRING" and produces a value of type "MSG". It does so by making a record containing four components from a record containing five and an additional value, represented in rule 501 by "ssname". As indicated in the type definition for the "OP" type in Fig. 9, the last two components of the record are the "STRING" values "from_proc" and "to_proc". The values for these components are not contained in either "OP" or "STRING", but must instead be determined using those values. The determination is performed by two more rules 501. Subrule specifier 1001 for the first of these subrules, "eval_from_proc", is located at line 15 of Fig.11; the subrule specifier 1001 for the second, "eval_to_proc" is located at line 16.

Rule 501 "eval_from_proc" is defined at lines 20-33 of Fig.11. It takes two values with the "STRING" type and produces a third value with the same type. "eval_from_proc" has multiple rule bodies 1103. Each rule body 1105 in multiple rule bodies 1103 defines a production of the destination value from the source value; which rule body 1105 is actually applied depends upon a source value or a component of a source value. Any rule 501 may include such multiple rule bodies 1103.

Continuing with the explanation of "eval_from_proc", that rule 501 is applied in "eval_msg" to the component names 515 "optype" and "ss_name". These names are in turn defined in left-hand side 511 of "eval_msg" as being components of a record value of type "OP". Going now to the subrule specifier 1001 for "eval_msg", it may be seen that "eval_msg" is applied to the component name 515 "op", defined on left-hand side 511 of the rule "da_to_ipc" as being a component of values of type DA. Turning to that type declaration in Fig. 8, it may be seen that the corresponding component of the type "OP" has the "STRING" type, as required by "eval_from_proc"

Each of the three rule bodies 1105 has a string constant 1107 on left-hand side 511 in a position which corresponds to the "STRING" formal argument; which of the rule bodies 1105 is selected depends on the value of the actual argument, or in the context of the "eval_msg" subrule, on the value of "optyp", which in turn depends on the value of "op" in the rule "da_to_ipc" of Fig. 10. If the value of the actual argument is the same as that of constant 1107 for a rule body 1105, then the value produced by the rule is produced as specified in that rule body 1105. "eval_from_proc" thus produces its value of type "STRING" as follows:

- if the value of "optyp" is "event_op", the "STRING" value has the value of the second actual argument, "ssname";
- else if the value of "optyp" is "read_op", the "STRING" value is set to the value of "ssname";
- else if the value of "optyp" is "write_op", the "STRING" value is set to the string constant "control".

As is clear from the foregoing, in a preferred embodiment, the multiple rule bodies 1103 operate like IF...THEN...ELSEIF OR CASE STATEMENTS IN high-level programming languages, i.e., only one of the multiple rule bodies 1103 is selected in response to a given source value. In other embodiments, multiple rule bodies may also have a rule body 1105 which, like the ELSE clause of the IF... THEN..... . ELSEIF statement or the OTHERWISE clause of the CASE statement, handles any value which is not dealt with by the other rule bodies 1105.

In a preferred embodiment, there is also a generalized notation for rule bodies 1105 in multiple rule bodies 1103. In that notation, constant 1107 appears as part of a Boolean expression in a "where" clause:

17

eval__from__proc «optype, ssname» where optype = = "even__top"

--> ssname

When the Boolean expression, in this case, 'optype = = "event__op"', is true, the destination value is produced as specified in the rule body.

The rule 501 "eval__to__proc" at lines 37-49 of Fig. 11 is another example of a rule 501 with multiple rule bodies 1103. "eval__to__proc" operates to determine the value to be given the component "to__proc" of the type "MSG" (Fig. 9) in the same fashion as "eval__from__proc" operates to determine the value to be given the component "from__proc".

Conclusion

The foregoing detailed discussion of a preferred embodiment of the invention has disclosed to one of ordinary skill in the art how the novel methods and apparatus of the present invention may be employed to produce a second structured value from a first structured value. Advantages of the invention include the separation of production of one structured value from another from other functions performed by computer programs, representations for specifying such productions which are clearer to the human reader and permit improved type checking, and improved representations of certain operations on variable-length lists.

While the foregoing detailed discussion has disclosed the best mode of practicing the invention presently known to the inventor, other implementations are possible. In particular, other embodiments may employ syntaxes different from the ones disclosed herein, other embodiments may employ a preprocessor or interpreter to generate code from rule 501 and rule application specification 601, and other techniques may be used to associate rule 501 with rule application specification 601.

This being the case, the scope of the claims is not to be understood to be limited to the embodiments of the methods and apparatus disclosed herein, but is to be understood to include all equivalents thereto.

## Claims

1. A method practiced in a computer system for providing instructions to the computer system which specify production of second components of a second structured value stored in the computer system from first components of a first structured value stored in the computer system, the method comprising the step of:

   applying a rule application specification stored in the computer system which includes a reference to a production rule stored in the computer system and a reference to the first structured value to provide the instructions, the production rule defining how destination components of any second structured value which has the same structure as the second value are to be produced from source components of any first structured value which has the same structure as the first value and including a first part specifying the source components and a second part specifying how the source components are to be employed to produce the destination components and the instructions specifying components of the first value corresponding to the source components as the first components and components of the second value corresponding to the destination components as the second components.

2. The method as set forth in claim 1 and further including the step of:

   applying a type declaration stored in the computer system which defines structures for the any first value and the any second value to the production rule to determine from the type declarations and from the first part and the second part whether the production rule defines a permissible production.

3. The method as set forth in claim 2 and further including the step of:

   applying the type declaration which defines the structure for the any first value, the production rule, and a value declaration stored in the computer system which defines the type of the first value to determine from the type declaration which defines the structure for the any first value, the value declaration, and the production rule whether the structure of the first value corresponds to the structure of the any first value.

4. The method as set forth in claim 3 wherein:

18

the instructions further specify a check to determine whether the first value is structured as required by the type thereof.

5. The method as set forth in claim 1 wherein:
the first part includes structure specifiers for specifying the structure of the any first value and
the second part includes structure specifiers for specifying the structure of the any second value.

6. The method as set forth in claim 1 wherein:
the first part includes component names for indicating the source components of the any first value;
the second part employs the component names to specify how the source components are used to produce the destination components; and
the instructions further specify that the first components corresponding to the source components indicated by the component names as employed in the first part be used as specified by the component names as employed in the second part to produce the second components.

7. The method as set forth in claim 6 wherein:
the scope of the component names is confined to the first part and the second part.

8. The method as set forth in claim 6 wherein:
there is a plurality of production rules;
the second part includes a reference to a production rule which includes a component name in an actual argument; and
the production rule referred to in the second part specifies how the actual argument including the component name is to be used to produce a destination component.

9. The method as set forth in claim 8 wherein:
the production rule referred to in the second part is applied to the component of the first structured value corresponding to the source component indicated by the component name in the same fashion as the rule application specification is applied to the first structured value.

10. The method as set forth in claim 9 wherein:
the reference to the production rule refers to a production rule in which the reference is employed; and
the production rule referred to in the reference is recursively applied.

## FIG. 1

101

```
%type STRINGS    is      <STRING>

%type PERSON     is      [
                                STRING      name,
                                STRING      spouse,
                                STRING      dept_number
                         ]

%type EMPLOYEES is       <PERSON>

%type EMP_DATA  is       [
                                STRINGS     names,
                                STRINGS     spouses,
                                STRINGS     dept_numbers
                         ]
```

## FIG. 2

```
EMP_DATA lr2rl(staff)
EMPLOYEES staff;
{
    STRINGS names, spouses, dept_nos;
    EMP_DATA emp_data;

    names = alloc(STRINGS);
    spouses = alloc(STRINGS);
    dept_nos = alloc(STRINGS);

    FORALL person:PERSON IN staff LOOP

        names = append(copy(name(person)), names);
        spouses = append(copy(spouse(person)), spouses);
        dept_nos = append(copy(dept_number(person)), dept_nos);

    ENDLOOP

    emp_data = alloc(EMP_DATA);
    names(emp_data) = names;
    spouses(emp_data) = spouses;
    dept_numbers(emp_data) = dept_nos;

    return emp_data;
}
```

# FIG. 3

```
proc lr2rl(staff);

    return   [
                [ person(1): person in staff ],
                [ person(2): person in staff ],
                [ person(3): person in staff ]
            ];

end proc lr2rl;
```

# FIG. 4

```
lr2rl(staff) = aux_rule( staff, (), (), () );

aux_rule( ( (name, spouse, dept_no), others),
            names,
            spouses,
            dept_nos
          )
   =    aux_rule( others,
                    append(name, names),
                    append(spouse, spouses),
                    append(dept_no, dept_nos)
                  );

aux_rule( (), names, spouses, dept_nos )
     =   (names, spouses, dept_nos);

append( z, (x,y) ) = ( x, append(z,y) );
append( x, () ) = (x);
```

## FIG. 5

501

```
lr2rl<<EMPLOYEES>>: EMP_DATA                              ]503
     505   507           509
lr2rl    <<  512)  513       515  520                  512)
510              <   (i)  [name(i),  spouse(i), dept_no(i)]  >  ]511  ]504
         >>      514   519       516              519
                                             518
         -->

519'~[ 512'  513'    516'   512'
            <  (i)  name(i)  >,  520'
       514' <  (i)  spouse(i) >,                           ]517
            <  (i)  dept_no(i) >
519'~]
```

## FIG. 6

```
EMPLOYEES employee_list;   ]603
EMP_DATA employee_data;

. . .
                     605  607   609       607
employee_data = lr2rl<< employee_list >>;
                     601
```

## FIG. 7

701 TREE PRODUCTION

START

705 MAKE TYPE, RULE APPLICATION TREES

707 CHECK TREES AND DO STATIC ANNOTATION

709 TREES OK? — NO → 711 ERROR

YES

713 DYNAMICALLY ANNOTUTE LHS SUBTREE AND VALIDATE SOURCE VAL

715 SOURCE VAL OK? — NO → 717 ERROR

YES

719 PRODUCE DEST VAL AS SPEC. IN RHS SUBTREE USING SOURCE VALS

END

703 TREE INTERPRETATION

## FIG. 8

```
%type    HSITYPE        is      enum {port,h_code}

%type    HSI            is      [
                                    HSITYPE            hsiclass,
                                    STRING             portname,
                                    STRING             hsicode
                                ]

%type    ARGS           is      <STRING>

%type    OPTYPE         is      STRING

%type    OP             is      [
                                    OPTYPE             dev_op_type,
                                    STRING             dev_op_name,
                                    ARGS               dev_op_args,
                                    STRING             dev_op_rtn,
                                    HSI                   dev_op_hsi
                                ]

%type    OPS            is      <OP>

%type    DEV            is      [
                                    STRING             dev_name,
                                    OPS                   dev_ops
                                ]

%type    DEVS           is      <DEV>

%type    SUBSYSTEM      is      [
                                    STRING             ss_name,
                                    DEVS               ss_devs
                                ]

%type    SUBSYSTEMS     is      <SUBSYSTEM>

%type    DA             is      [
                                    MYTYPES            da_types,
                                    SUBSYSTEMS         da_subsystems
                                ]
```

## FIG. 9

```
%type    MSG              is      [
                                      STRING           msg_name,
                                      ARGS             msg_args,
                                      STRING           from_proc,
                                      STRING           to_proc
                                  ]

%type    MSGS             is      <MSG>

%type    PROC             is      STRING

%type    PROCS            is      <PROC>

%type    IPC              is      [
                                      PROCS            ipc_procs,
                                      MYTYPES          ipc_types,
                                      MSGS             ipc_msgs
                                  ]
```

## FIG. 10

```
/****************************************************************/
%rule
da_to_ipc<<DA>>: IPC

da_to_ipc <<
                [
                    datyp,
                    <    (i)
                         [
                             ssname(i),
                             <    (j)
                                  [
                                      devname(i,j),
                                      < (k) op(i,j,k) >
                                  ]            1003
                             >
                         ]
                    >
                ]
        >>

        -->

                [
                    < (i) ssname(i) >,
                    datyp,
                    < (i,j,k) eval_msg<<op(i,j,k),ssname(i)>> >
                ]            1001
```

1007  1005

## FIG. 11

```
/*******************************************************************/
%rule
eval_msg<<OP,STRING>>: MSG

eval_msg <<
                [ optyp, opname, opargs, oprtn, ophsi ],
                ssname
        >>

        -->                                                          501

                [
                opname,
                opargs,        ⌐1001
                eval_from_proc<<optyp,ssname>>,
                eval_to_proc<<optyp,ssname>>
                ]              L1001
/*******************************************************************/
%rule
eval_from_proc<<STRING, STRING>>: STRING

eval_from_proc << "event_op", ssname >>⎤
        -->        1107⌡          ⎬ 1105
        ssname                    ⎦

eval_from_proc << "read_op", ssname >>⎤                 501
        -->        1107⌡          ⎬ 1105    ⎬ 1103
        ssname                    ⎦

eval_from_proc << "write_op", ssname >>⎤
        -->                 1107⌡⎬ 1105
        "control"
/*******************************************************************/
%rule
eval_to_proc<<STRING, STRING>>: STRING

eval_to_proc << "event_op", ssname >>⎤
        -->        L 1107         ⎬ 1105
        "control"                 ⎦

eval_to_proc << "read_op", ssname >> ⎤
        -->        L 1107         ⎬ 1105    ⎬ 1103    ⎬ 501
        "control"                 ⎦

eval_to_proc << "write_op", ssname >>⎤
        -->        L 1107         ⎬ 1105
        ssname                    ⎦
```

FIG. 12

_1201_

_1203_

```
┌─────────────────────────────────────────────────┐
│                  SOURCE CODE                     │
│                                                  │
│   ┌─────────┐  ┌─────────┐  ┌──────────────────┐ │
│   │  TYPE   │  │  RULE   │  │ RULE APPLICATION │ │
│   │ SOURCE  │  │ SOURCE  │  │     SOURCE       │ │
│   └─────────┘  └─────────┘  └──────────────────┘ │
│     1205         1207            1209            │
└─────────────────────────────────────────────────┘
```

```
┌─────────────────────────────────────────────────┐
│                 TREE  BUILDER                    │  1211
└─────────────────────────────────────────────────┘
```

1215

┌──────────┐        ┌─────────────────────────┐        ┌────────┐
│TYPE TREE │        │       RULE TREE         │        │ APPL.  │ 1221
└──────────┘        ├────────────┬────────────┤        │ TREE   │
   1213             │   LHS      │   RHS      │        └────────┘
                    │ SUBTREE    │ SUBTREE    │
                    │  1217      │  1219      │
                    └────────────┴────────────┘

TYPE          DA          1237        RHSI1241
DEFS          1237
1223                                  SR1225, SA1227

                          SOURCE REF 1228

     1229                 SOURCE COMPONENT
┌──────────┐                VALUES 1245
│   TREE   │
│ CHECKER  │
└──────────┘

LHSI
1239

                    ┌────────────┬────────────┐
                    │  LHS       │  RHS       │ 1233
                    │  INT       │  INT       │
                    │  1235      │  1243      │
                    └────────────┴────────────┘

ERROR                1231        DESTINATION
MESSAGES 1231                    VALUE 1247

27

FIG. 13

1301

1303
RECORD

1310  1313

[ 1307

, 1311  1315
]

TPTR 1305

NPTR 1319

RULE OBJ
1309

OT 1310

VL PTR 1331

VPTR (1) 1335

1337

1317
ANY OBJ

VPTR (n)

1321
IS OBJ

1323
ID
"NAME"

( 1325

INDEX 1327

) 1329

1340

1339
i